# EUROPÄISCHE PATENTSCHRIFT

(11) **EP 3 120 059 B1**
(45) Veröffentlichungstag und Bekanntmachung des Hinweises auf die Patenterteilung: **17.10.2018**
(21) Anmeldenummer: 15702994.3
(22) Anmeldetag: 22.01.2015
(51) Int. Cl.: F16K 31/08, F16K 31/56

(54) **STELLANTRIEB FÜR EIN SCHNELLSCHLUSSVENTIL**
ACTUATOR FOR A QUICK-CLOSING VALVE
MÉCANISME DE COMMANDE POUR SOUPAPE À FERMETURE RAPIDE

(30) Priorität: 22.05.2014 DE 102014209798
(43) Veröffentlichungstag der Anmeldung: 25.01.2017
(73) Patentinhaber: Siemens Aktiengesellschaft, 80333 München (DE)
(72) Erfinder: BECKER, Mark, 67227 Frankenthal (DE); MARKSTEINER, Walter, 67227 Frankenthal (DE); SCHLEER, Matthias, 67251 Freinsheim (DE)
(86) Internationale Anmeldenummer: PCT/EP2015/051193
(87) Internationale Veröffentlichungsnummer: WO 2015/176827

(56) Entgegenhaltungen:
- DE-A1- 1 500 249
- DE-U1- 8 225 214

## Beschreibung

Die Erfindung betrifft ein Stellantrieb für ein Schnellschussventil nach den Merkmalen des unabhängigen Patentanspruchs 1. Des Weiteren betrifft die Erfindung ein Schnellschlussventil nach den Merkmalen des unabhängigen Patentanspruchs 4.

Schnellschlussventile kommen immer dann zum Einsatz, wenn aus Sicherheitsgründen die Fluidströmung in Anlagen schlagartig unterbrochen werden muss, um eine Gefahrensituation abzuwenden. Turbinen benötigen beispielsweise aus Sicherheitsgründen ein Schnellschlussventil, das bei Überdrehzahl oder anderen Notfällen die Dampf-/Gaszufuhr zur Turbine möglichst schnell unterbricht, um ein Durchgehen der Turbine zu verhindern. Die Schnellschlussventile benötigen einen Stellantrieb, der sowohl eine hohe Schließgeschwindigkeit ermöglicht, wie auch eine hohe Stellkraft besitzt. Zusätzlich müssen diese Stellantriebe ein sicheres und schnelles Schließen des Schnellschlussventils gewährleisten. Bislang sind hauptsächlich hydraulische und pneumatische Stellantriebe im Einsatz. Diese schließen in der Regel durch eine Federkraft in dem das Medium vor dem Kolben über ein Magnetventil abgeströmt wird. Ein elektrischer Stellantrieb wäre wünschenswert, da dann auf das bislang verwendete Regelöl verzichtet werden könnte. Bislang werden elektrische Stellantriebe aber vorwiegend für Ventile zur Turbinenregelung verwendet.

Ein Schnellschlussventil mit elektrischem Stellantrieb ist in der DE 15 00 249 A offenbart. Der Stellantrieb weist eine mit dem Schnellschlussventil koppelbare Ventilspindel auf. Die Ventilspindel ist in axialer Richtung verschiebbar und an der dem Schnellschlussventil abgewandten Seite an einem Federteller befestigt, welcher gegen eine Federkraft einer Schließfeder vorspannbar ist. Der Federteller steht in Wirkverbindung mit einer bewegbaren Klinke, wobei die Klinke in Richtung eines elektromagnetischen Haftmagneten und mittels Bestromung des elektromagnetischen Haftmagneten gehalten werden kann. Bei einer axialen Bewegung der Spannspindel entgegen der Federkraft kann die Klinke in die Klinkenscheibe einhaken. Bei einem stromlosen Zustand des elektromagnetischen Haftmagneten klinkt die Klinke aus der Klinkenscheibe aus und die Schließfeder entspannt, wodurch das Schnellschlussventil schließt.

Die DE 82 25 214 U1 offenbart ebenfalls einen Stellantrieb für ein Schnellschlussventil. Der Stellantrieb umfasst dabei eine Ventilspindel,wobei die Ventilspindel in axialer Richtung verschiebbar ist und an der dem Schnellschlussventil abgewandten Seite, an einem Federteller befestigt ist, welcher gegen eine Federkraft einer Schließfeder vorspannbar ist. Die Vorspannung erfolgt mittels einer in axialer Richtung bewegbaren Spannspindel, die an Ihrem zum Federteller gerichteten Ende einen elektromagnetischen Haftmagneten aufweist, an dem bei Bestromung des Haftmagneten der Federteller haftet und dadurch mittels der Spannspindel gegen die Federkraft der Schließfeder vorspannbar ist. Bei einem stromlosen Zustand des elektromagnetischen Haftmagneten, wird der Federteller frei gegeben und die Schließfeder entspannt.

Aufgabe der vorliegenden Erfindung, ist es, ein Stellantrieb für ein Schnellschlussventil bereitzustellen, welcher ein schnelles Schließen eines Schnellschlussventils ermöglicht und einen störungsfreien Betrieb gewährleistet. Des Weiteren ist es Aufgabe der Erfindung ein Schnellschlussventil mit einem solchem Stellantrieb bereitzustellen.

Die Aufgabe wird hinsichtlich des Stellantriebs durch die Merkmale des unabhängigen Patentanspruchs 1 gelöst. Hinsichtlich des Schnellschlussventils wird die Aufgabe durch die Merkmale des unabhängigen Patentanspruchs 4 gelöst.

Weitere Vorteile der Erfindung, die einzeln oder in Kombination miteinander einsetzbar sind, sind Gegenstand der Unteransprüche.

Der erfindungsgemäße Stellantrieb für ein Schnellschlussventil, umfasst eine mit dem Schnellschlussventil koppelbare Ventilspindel, wobei die Ventilspindel in axialer Richtung verschiebbar ist und an der dem Schnellschlussventil abgewandte Seite an einem Federteller befestigt ist, welcher gegen eine Federkraft einer Schließfeder vorspannbar ist, wobei die Vorspannung mittels einer in axialer Richtung bewegbaren Spannspindel erfolgt, die an Ihrem zum Federteller gerichteten Ende einen elektromagnetischen Haftmagneten aufweist, an dem bei Bestromung des Haftmagneten (2), der Federteller haftet und dadurch mittels der Spannspindel gegen die Federkraft der Schließfeder vorspannbar ist, wobei bei einem stromlosen Zustand des elektromagnetischen Haftmagneten , der Federteller frei gegeben wird und die Schließfeder entspannt und wobei der Stellantrieb eine Drossel umfasst, über die die Schließzeit des Stellantriebs einstellbar ist, zeichnet sich dadurch aus,dass die Drossel durch eine Öffnung innerhalb des Federteller ausgebildet ist
Der Haftmagnet ist dabei so ausgelegt, dass seine Haftkraft ausreicht, um das Schnellschlussventil gegen die Federkraft der Schließfeder vorzuspannen und in Position zu halten. Die Auslösung des Schnellschlusses erfolgt unabhängig vom Antrieb der Spannspindel und kann dadurch sehr schnell erfolgen. Der Stellantrieb ist nach dem sogenannten Fail-Safe-Prinzip aufgebaut, das heißt er schließt das Schnellschlussventil bei Stromausfall selbstständig.
Die Schließzeit des Stellantriebes und damit des Schnellschlussventils ist auf einfache Weise über eine Drossel einstellbar. Das Schnellschlussventil soll üblicherweise, möglichst schnell den Fluidfluss unterbrechen, allerdings kann ein zu schnelles Schließen des Schnellschlussventils zu einem unerwünschten Druckstoß in der Rohrleitung führen. Aus diesem Grund kann es sinnvoll sein, eine Drossel vorzusehen, über die die Schließzeit des Stellantriebes und damit des Schnellschlussventils in gewissen Bereichen einstellbar und an das vorliegende System anpassbar ist.

Die Erfindung sieht vor, dass die Drossel durch eine Öffnung innerhalb des Federtellers realisiert ist. Die Ausbildung einer entsprechenden Öffnung im Federteller, ermöglicht eine besonders einfache Ausgestaltung der Drossel. Je größer die Öffnung innerhalb des Federtellers ausgebildet wird, desto schneller ist die Schließzeit des Stellantriebs. Die Ausbildung der Drossel als einfache Öffnung innerhalb des Federtellers ist dabei besonders günstig und robust.

Für den erfindungsgemäßen Stellantrieb können darüber hinaus Teile verwendet werden, die günstig in der Herstellung oder in der Beschaffung sind, wodurch sich ein kostengünstiger Stellantrieb realisieren lässt.

Eine Ausgestaltung der Erfindung sieht vor, dass der Stellantrieb für das Schnellschlussventil dadurch gekennzeichnet ist, dass die Spannspindel mittels eines elektrischen Antriebs in axialer Richtung bewegbar ist.
Durch die Verwendung eines elektrischen Antriebs für die Spannspindel kann auf das sonst üblicherweise verwendete Regelöl vollständig verzichtet werden. Da das Regelöl häufig eine Gefahrenquelle, insbesondere eine Brandgefahr darstellt, erhöht sich durch die Verwendung des elektrischen Antriebs die Betriebssicherheit des Schnellschlussventils. Der Schließmechanismus des Schnellschlussventils ist dabei so konstruiert, dass er unabhängig ist vom elektrischen Antrieb, welcher das Schnellschlussventil öffnet. Wird als elektrischer Antrieb ein Regelmotor verwendet kann das Schnellschlussventil gleichzeitig als Regelventil eingesetzt werden. Hierdurch kann das Ventil sowohl den Schnellschluss als auch die Regelung des Durchflusses durch das Ventil übernehmen.

Eine weitere Ausgestaltung der Erfindung sieht vor, dass der Stellantrieb für das Schnellschlussventil dadurch gekennzeichnet ist, dass die Spannspindel mittels eines hydraulischen oder pneumatischen Antriebs in axialer Richtung bewegbar ist. Ein hydraulischer oder pneumatischer Antrieb bietet sich vor allem dann an, wenn bereits andere pneumatische oder hydraulische Regelungen in der Anlage vorgesehen sind. In diesem Fall können diese kostengünstig für den Antrieb des Stellantriebs für das Schnellschlussventil genutzt werden. Hierdurch vereinfacht sich die Ansteuerung des Stellantriebes und die Kosten für den Stellantrieb können reduziert werden.

Das erfindungsgemäße Schnellschlussventil, für den Schnellschluss bei einer Gas- oder Dampfturbine, zeichnet sich dadurch aus, dass das Schnellschlussventil mittels eines Stellantriebs nach einem der vorherigen Ansprüche angesteuert wird. Wie bereits beschrieben, ermöglicht der erfindungsgemäße Stellantrieb ein schnelles Verschließen des Schnellschlussventils im Falle des Schnellschlusses.
Weitere Vorteile und Ausgestaltungen der Erfindung, welche einzeln oder in Kombination miteinander eingesetzbar sind, werden nachfolgend anhand der Figuren dargestellt. Bei den Figuren handelt es sich nur um schematische Darstellungen der Erfindung. Gleiche bzw. funktionsgleiche Bauteile sind dabei figurübergreifend mit denselben Bezugszeichen versehen. Es zeigt:
- Figur 1: den erfindungsgemäßen Stellantrieb in einer ersten Position;
- Figur 2: den erfindungsgemäßen Stellantrieb in einer zweiten Position;
- Figur 3: den erfindungsgemäßen Stellantrieb beim Auslösen des Schnellschlusses;
- Figur 4: den erfindungsgemäßen Stellantrieb nach dem Schnellschluss.

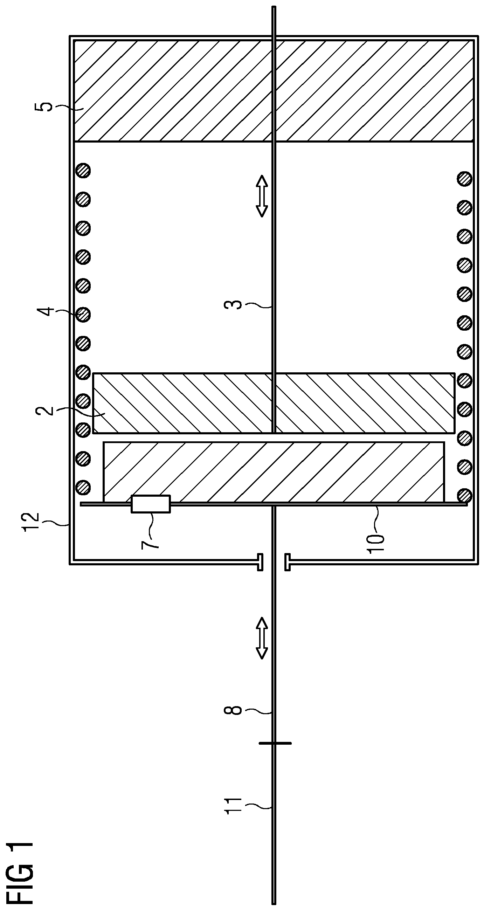

Figur 1 zeigt einen Stellantrieb für ein Schnellschlussventil. Der Stellantrieb umfasst eine Ventilspindel 8, welche mit einer Spindel des Schnellschlussventils 11 koppelbar ist. Die Ventilspindel 8 kann dabei auch durchgehend ausgebildet sein, so dass keine Koppelung mit der Spindel 11 notwendig ist. Erfindungsgemäß sind beide Varianten umfasst. Der Stellantrieb ist in einem Gehäuse 12 angeordnet. Die Ventilspindel 8 ragt durch eine Öffnung im Gehäuse 12 aus diesem heraus und ist in axialer Richtung verschiebbar ausgebildet. Die Ventilspindel 8 ist an ihrem, dem Schnellschlussventil abgewandtem Ende, an einem Federteller 10 befestigt, welcher gegen eine Federkraft einer im Gehäuse 12 angeordneten Schließfeder 4 vorspannbar ist. Der Federteller 10 steht dabei in Wirkverbindung mit einem elektromagnetischen Haftmagneten 2. Der Federteller 10 lässt sich mittels des elektromagnetischen Haftmagneten 2, welche mittels einer Spannspindel 3 in axialer Richtung bewegt werden kann, gegen Federkraft der Schließfeder 4 vorspannen. Hierzu fährt der Stellmotor 5 den elektromagnetischen Haftmagneten 2 zunächst an den Federteller 10 heran. Mittels Bestromung des elektromagnetischen Haftmagneten 2 haftet der Federteller 10 am elektromagnetischen Haftmagneten 2 und kann mittels des Stellmotors 5 über die Spannspindel 3 gegen die Federkraft der der Schließfeder 4 vorgespannt werden. Im stromlosen Zustand des elektromagnetischen Haftmagneten 2 löst sich der Federteller 10 vom Haftmagneten 2 und wird durch die Federkraft der Schließfeder entspannt, wodurch der Schnellschluss ausgelöst wird.

Nachfolgend sollen anhand der Figuren 1 bis 4 die Funktionsweise des Stellantriebs 5 beschrieben werden.

Zum Öffnen des Schnellschlussventils fährt die die Spannspindel 3 mittels des Stellantriebs 5 (Spannspindelantriebs), welcher vorzugsweise elektrisch ausgebildet ist, in das Gehäuse 12 hinein. Alternativ kann der Stellantrieb 5 auch als hydraulischer oder pneumatischer Antrieb ausgebildet sein.

Durch das Verfahren der Spannspindel 3 wird der an der Spannspindel 3 angeordnete elektromagnetische Haftmagnet 2 an den Federteller herangefahren. Befindet sich der elektromagnetische Haftmagnet 2 nahe genug am Federteller 10 kann durch Bestromung des elektromagnetische Haftmagnet 2 ein Haften des Federtellers 10 am Haftmagneten 2 erzielt werden.

Die Vorspannung des Ventiltellers 10 gegen die Federkraft der Schließfeder 4 erfolgt dabei dadurch, dass der Stellantrieb 5 die Ventilspindel 8 in das Gehäuse 12 hineinzieht. Hierdurch wird über den am elektromagnetischen Haftmagnet 2 haftenden Federteller 10 die Ventilspindel 11 verfahren und das Schnellschlussventil in eine geöffnete Stellung gebracht wird.

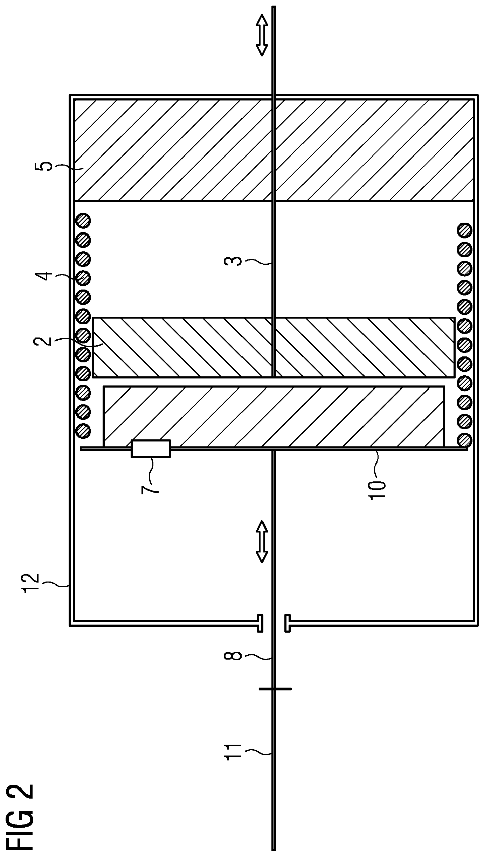

Der solchermaßen vorgespannte Stellantrieb ist in Figur 2 dargestellt. Die Kraftübertragung von der Spannspindel 3 auf die Ventilspindel 8 erfolgt dabei ausschließlich über die elektromechanischen Kräfte des Haftmagneten.

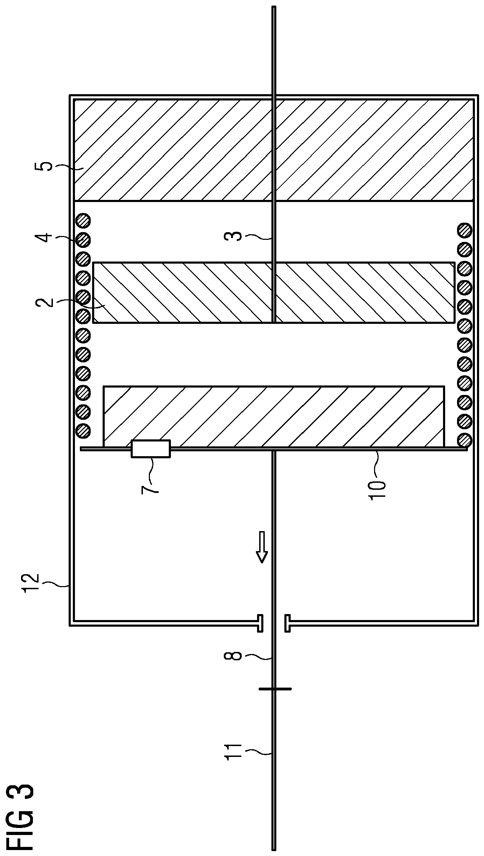

Im Schnellschlussfall, welcher in Figur 3 dargestellt ist, wird der elektromagnetische Haftmagnet 2 stromlos geschaltet. Dies führt dazu, dass der Federteller 10 nicht mehr vom elektromagnetischen Haftmagneten 2 in seiner Position gehalten wird. Aufgrund der Federkraft der Schließfeder 4, wird der Federteller 10 in das Gehäuse 12 bewegt (in Richtung des Schnellschlussventils). Hierdurch fährt die Ventilspindel 8 aus dem Gehäuse aus und löst somit den Schnellschluss des Schnellschlussventils aus.

Die Schließgeschwindigkeit des Stellantrieb und somit auch des Schnellschlussventils ist über die Drossel 7 regelbar. Die Drossel 7 ist dabei als einfache Öffnung im Federteller 10 realisiert. Je größer die Öffnung innerhalb des Federtellers 10 ausgebildet ist, umso schneller ist die Schließzeit des Stellantriebs, da die Luft oberhalb des Federtellers 10 schneller in den Raum unterhalb des Federtellers 10 abströmen kann. Die Ausbildung der Drossel 7 als einfache Öffnung innerhalb des Federtellers ist dabei besonders günstig und robust.

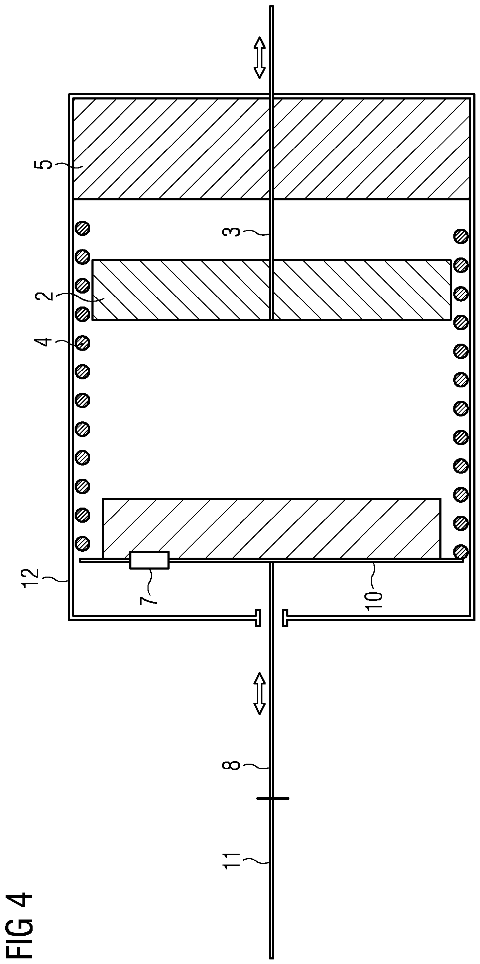

Figur 4 zeigt den Stellantrieb bei ausgelöstem Schnellschluss. Zum Öffnen des Schnellschlussantriebs muss der Federteller 10 wieder mittels des elektromagnetischen Haftmagneten 2 und der Spannspindel 3 gegen die Schließfeder 4 vorgespannt werden.

Durch die Verwendung eines elektrischen Antriebes als Antrieb 5 kann das Schnellschlussventil auch als Regelventil ausgebildet und eingesetzt werden. Für die Verwendung als Regelventil ist eine direkte oder innendirekte Messung der Ventilöffnung beispielsweise über die Stellung der Spannspindel 3 oder des Ventiltellers 10 mittels geeigneter Sensoren notwendig. Der Spannspindelantrieb wird dann als Regelmotor angesteuert. Die Verwendung eines elektrischen Antriebs als Spannspindelantrieb ermöglicht es zudem ganz auf Regelöl zu verzichten. Hierdurch lässt sich ein ölfreies Schnellschlussventil realisieren. Dies ist insbesondere im Hinblick auf die Betriebssicherheit von Vorteil, da sich Öl entzünden kann und somit ein Sicherheitsrisiko darstellt. Der Stellantrieb ist dabei erfindungsgemäß so konstruiert, dass die Auslösung des Schnellschluss mechanisch erfolgt und dabei völlig unabhängig vom elektrischen Antrieb der Spannspindel erfolgt.

Grundsätzlich können mit dem erfindungsgemäßen Stellantrieb Kräfte übertragen werden, die abhängig sind von der Leistung des Haftmagneten. Der Antrieb ist dabei nach dem sogenannten Fehl-Safe-Prinzip aufgebaut, dies Bedeutet, dass das Schnellschlussventil bei einem Stromausfall selbstständig schließt.

Der erfindungsgemäße Stellantrieb kann dabei, aufgrund der günstig herzustellenden oder zu beschaffenden Bauteile, einfach und kostengünstig hergestellt werden.

## Patentansprüche

1. Stellantrieb für ein Schnellschlussventil, umfassend eine mit dem Schnellschlussventil koppelbare Ventilspindel (8), einen Federteller (10), eine Schließfeder (4) sowie eine Spannspindel (3)
wobei,
- die Ventilspindel (8) in axialer Richtung verschiebar ist und
- an der dem Schnellschlussventil abgewandten Seite, an dem Federteller (10) befestigt ist, welcher gegen eine Federkraft der Schließfeder (4) vorspannbar ist,
wobei,
- die Vorspannung mittels der in axialer Richtung bewegbaren Spannspindel (3) erfolgt, die an Ihrem zum Federteller (10) gerichteten Ende einen elektromagnetischen Haftmagneten (2) aufweist, an dem bei Bestromung des Haftmagneten (2) der Federteller (10) haftet und dadurch mittels der Spannspindel (3) gegen die Federkraft der Schließfeder (4)vorspannbar ist, und
wobei,
- bei einem stromlosen Zustand des elektromagnetischen Haftmagneten (2), der Federteller (10)frei gegeben wird und die Schließfeder (4) entspannt
wobei,
- der Stellantrieb eine Drossel (7) umfasst, über die die Schließzeit des Stellantriebs einstellbar ist,
**dadurch gekennzeichnet, dass**
die Drossel (7) durch eine Öffnung innerhalb des Federtellers (10) ausgebildet ist.

2. Stellantrieb für ein Schnellschlussventil nach Anspruch 1, umfassend einen elektrischen Antrieb (5)
**dadurch gekennzeichnet, dass**
die Spannspindel (3) mittels des elektrischen Antriebs (5) in axialer Richtung bewegbar ist.

3. Stellantrieb für ein Schnellschlussventil nach Anspruch 1,
**dadurch gekennzeichnet, dass**
die Spannspindel (3) mittels eines hydraulischen oder pneumatischen Antriebs (5) in axialer Richtung bewegbar ist.

4. Schnellschlussventil, für den Schnellschluss bei einer Gas- oder Dampfturbine,
**dadurch gekennzeichnet, dass**
das Schnellschlussventil mittels eines Stellantriebs nach einem der vorherigen Ansprüche angesteuert wird.

## Claims

1. Actuating drive for a quick action valve, comprising a valve stem (8) which can be coupled to the quick action valve, a spring collar (10), a closing spring (4) and a tensioning spindle (3),
- it being possible for the valve stem (8) to be displaced in the axial direction, and,
- on the side which faces away from the quick action valve, the said valve stem (8) being fastened to the spring collar (10) which can be prestressed counter to a spring force of the closing spring (4),
- the prestressing taking place by means of the tensioning spindle (3) which can be moved in the axial direction and, at its end which is directed towards the spring collar (10), has an electromagnetic holding solenoid (2), to which the spring collar (10) adheres in the case of energization of the holding solenoid (2) and, as a result, can be prestressed by means of the tensioning spindle (3) counter to the spring force of the closing spring (4), and,
- in the case of a currentless state of the electromagnetic holding solenoid (2), the spring collar (10) being released and the closing spring (4) relaxing,
- the actuating drive comprising a restrictor (7), via which the closing time of the actuating drive can be set,
**characterized in that**
the restrictor (7) is configured by way of an opening within the spring collar (10).

2. Actuating drive for a quick action valve according to Claim 1, comprising an electric drive (5), **characterized in that** the tensioning spindle (3) can be moved in the axial direction by means of the electric drive (5).

3. Actuating drive for a quick action valve according to Claim 1, **characterized in that** the tensioning spindle (3) can be moved in the axial direction by means of a hydraulic or pneumatic drive (5).

4. Quick action valve, for quick action closure in a gas or steam turbine, **characterized in that** the quick action valve is actuated by means of an actuating drive according to one of the preceding claims.

## Revendications

1. Mécanisme de commande pour une soupape du type à fermeture rapide, comprenant une tige de soupape (8) qui peut s'accoupler à la soupape du type à fermeture rapide, une coupelle de ressort (10), un ressort de fermeture (4) ainsi qu'une broche de serrage (3) ;
dans lequel
- la tige de soupape (8) est mobile en direction axiale ; et
- est fixée, du côté qui se détourne de la soupape du type à fermeture rapide, à la coupelle de ressort (10) qui est mise en état de précontrainte à l'encontre d'une force élastique du ressort de fermeture (4) ;
dans lequel
- la précontrainte a lieu au moyen de la broche de serrage (3) mobile en direction axiale, qui présente, à son extrémité orientée vers la coupelle de ressort (10), un aimant de fixation électromagnétique (2) auquel vient se fixer la coupelle de ressort (10), dans le cas d'une alimentation en courant de l'aimant de fixation (2) et peut ainsi être mise en état de précontrainte au moyen de la broche de serrage (3) à l'encontre de la force élastique du ressort de fermeture (4) ; et
dans lequel
- dans un état de mise hors tension de l'aimant de fixation électromagnétique (2), la coupelle de ressort (10) est libérée et détend le ressort de fermeture (4) ;
dans lequel
- le mécanisme de commande comprend un dispositif d'étranglement (7) par lequel le temps de fermeture du mécanisme de commande peut être réglé ;
**caractérisé en ce que**
- le dispositif d'étranglement (7) est réalisé via une ouverture à l'intérieur de la coupelle de ressort (10) .

2. Mécanisme de commande pour une soupape du type à fermeture rapide selon la revendication 1, comprenant une commande électrique (5), **caractérisé en ce que** la broche de serrage (3) est mobile en direction axiale au moyen de la commande électrique (5).

3. Mécanisme de commande pour une soupape du type à fermeture rapide selon la revendication 1, **caractérisé en ce que** la broche de serrage (3) est mobile en direction axiale au moyen d'une commande hydraulique ou pneumatique (5).

4. Soupape du type à fermeture rapide, pour la fermeture rapide dans le cas d'une turbine à gaz ou à vapeur, **caractérisée en ce que** la soupape du type à fermeture rapide est excitée au moyen d'un mécanisme de commande selon l'une quelconque des revendications précédentes.
